(19)

**Europäisches Patentamt**

**European Patent Office**

**Office européen des brevets**

(11) **EP 4 575 615 A1**

(12) **EUROPEAN PATENT APPLICATION**

(43) Date of publication:
**25.06.2025 Bulletin 2025/26**

(21) Application number: **23218718.7**

(22) Date of filing: **20.12.2023**

(51) International Patent Classification (IPC):
***G02C 7/02*** *(2006.01)*

(52) Cooperative Patent Classification (CPC):
**G02C 7/028;** G02C 2202/24

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Carl Zeiss Vision International GmbH
73430 Aalen (DE)**

(72) Inventors:
• **Habtegiorgis, Selam Wondimu
73430 Aalen (DE)**

• **Jester, Philipp
73430 Aalen (DE)**
• **Liu, Yujing
73430 Aalen (DE)**
• **Sharifi, Hamed
73430 Aalen (DE)**
• **Karim, Waiz
73430 Aalen (DE)**

(74) Representative: **Carl Zeiss AG - Patentabteilung
Carl-Zeiss-Straße 22
73447 Oberkochen (DE)**

(54) **METHOD FOR CALCULATING A DATA OF A SPECTACLE LENS**

(57)      The present invention relates to a method being configured for calculating, by a computer, data of a spectacle lens for the purpose of a use of the data for a manufacture of the spectacle lens, the method comprising the step of generating data of a randomly modulated surface for said spectacle lens and the method being characterized in that said data of said randomly modulated surface resulting from an application of a continuous random surface modulation function or a scaled continuous random surface modulation function to a predefined surface for said spectacle lens.

Figure 1

EP 4 575 615 A1

**EP 4 575 615 A1**

**Description**

The present invention relates to a method being configured for calculating, by a computer, data of a spectacle lens according to the preamble of claim 1.

<u>Related prior art</u>

WO 2021/260642 A1 discloses, for example in paragraph [0029], methods for forming one or more geometrically defined shapes and/or contour optical elements on a surface of an ophthalmic lens comprising: defining a modulation function to modify one or more parameters of the ophthalmic lens surface geometry in a predefined region of the ophthalmic lens and in a predefined direction; and forming one or more geometrically defined shapes and/or contour optical elements by applying the modulating function to the one or more parameters of the surface geometry of the ophthalmic lens to change the curvature of at least one of a front surface of the ophthalmic lens and/or a back surface of the ophthalmic lens. According to WO 2021/260642 A1, paragraph [00109], geometrically defined shape and/or contour optical elements refers to a region in or on the modulated lens surface wherein one or more parameter(s) of the surface geometry that defines the lens surface shape in this region is/are modified via the use of the modulation function to result in a different geometry compared to the base surface. According to WO 2021/260642 A1, paragraph [00110], the modulating function is a mathematical function to alter one or more parameters of the surface geometry that define the lens surface shape of the ophthalmic lens applied on a region of the lens and in a direction. According to WO 2021/260642 A1, paragraph [00111], the direction refers to a direction along which the modulating function is applied and may be angular, radial, vertical, horizontal, random, or quasi-random, inter alia, or a combination of one or more directions from any point on the ophthalmic lens.

<u>Problem to be solved</u>

Departing from WO 2021/260642 A1, paragraph [00110] defining the modulating function as mathematical function applied to a starting surface geometry to create a modified geometry that is different to a base lens, the problem to be solved by the present invention is to create a modified geometry that is different to the base lens while simultaneously preventing habituation of an eye to said modified geometry.

<u>Summary of the invention</u>

The problem is solved by the method according to claim 1.
The method is configured for calculating, by a computer, data of a spectacle lens for the purpose of a use of the data for a manufacture of the spectacle lens, the method comprising the step of

- generating data of a randomly modulated surface for said spectacle lens, the method being characterized in that

said data of said randomly modulated surface resulting from an application of a continuous random surface modulation function or a scaled continuous random surface modulation function to a predefined surface for said spectacle lens.
"Data of a spectacle lens" is data configured for the purpose of a use of said data for a manufacture the spectacle lens. Preferably, said data of said spectacle lens is computer-readable data or in form of computer-readable data. Said computer-readable data may additionally contain manufacturing instructions for manufacturing the spectacle lens. Said manufacturing instructions may be computer-readable instructions for controlling one or more manufacturing machine(s) to manufacture the spectacle lens. Said computer-readable data may be (i) stored on a computer-readable storage medium, (ii) stored in a memory of a computer, (iii) embodied in or in the form of a data signal, (iv) transferred via a data signal, (v) retrievable from a data network. The computer-readable storage medium may be a non-transitory tangible computer-readable storage medium.
A "spectacle lens" is defined as in ISO 13666:2019(E), entry 3.5.2, as ophthalmic lens (3.5.1) worn in front of, but not in contact with, an eyeball. A front surface of the spectacle lens is as defined in ISO 13666:2019(E), entry 3.2.13, a surface of the spectacle lens (3.5.2) intended to be fitted away from an eye. A back surface of the spectacle lens is as defined in ISO 13666:2019(E), entry 3.2.14, a surface of the spectacle lens (3.5.2) intended to be fitted nearer to an eye.
"Generating" data of a randomly modulated surface for the spectacle lens comprises using a mathematical function to modify a predefined surface of a digital twin of said spectacle lens. The predefined surface of the digital twin of the spectacle lens is data of a predefined surface for said spectacle lens, said data of said predefined surface for said spectacle lens being configured for the purpose of a manufacture of said spectacle lens. The predefined surface of the digital twin of the spectacle lens is at least one of a predefined front surface of the digital twin of the spectacle lens and a predefined back surface of the digital twin of the spectacle lens, i.e., the predefined surface of the digital twin is at least one of a mathematical description of a front surface for said spectacle lens and a mathematical description of a back surface for said spectacle lens. The mathematical description of the front surface and the mathematical description of the back surface each is a mathematical formula describing a respective surface height z as a function of coordinates x and y. In other words, the respective mathematical description determines a z position of the respective surface in each x,y position. The mathematical descriptions preferably are closed mathematical descriptions.

The predefined front surface of the digital twin of the spectacle lens is defined analogously as in ISO 13666:2019(E), entry 3.2.13, as surface of the digital twin of the spectacle lens intended to be virtually positioned furthest to an eye model, for example a predefined eye model. The predefined back surface of the digital twin of the spectacle lens is defined analogously as in ISO 13666:2019(E), entry 3.2.14, as surface of the digital twin of the spectacle lens intended to be virtually positioned nearest to an eye model, for example a predefined eye model.

In the knowledge of an orientation of the front surface to the back surface, the mathematical description of at least one of the front surface and the back surface preferably result from an optimization towards an optical target for said spectacle lens.

The data of said randomly modulated surface for said spectacle lens is comprised in the data of the spectacle lens.

A "randomly modulated surface" for a spectacle lens is a modified version of the predefined surface for said spectacle lens.

A "continuous random surface modulation function" is a mathematical function of coordinates x and y that is defined by one parameter or more parameters. Said one parameter is determined by at least one of the group consisting of (i) one continuous probability distribution, (ii) more continuous probability distributions, (iii) one discrete probability distribution and (iv) more discrete probability distributions. Said more parameters are determined by at least one of the group consisting of (i) one continuous probability distribution, (ii) more continuous probability distributions, (iii) one discrete probability distribution, and (iv) more discrete probability distributions. Consequently, every realization of a defined continuous random surface modulation function differs, except when realizations do not differ coincidentally. The most common example of a continuous probability distribution is a normal distribution. The determination of said one parameter by at least one of the group consisting of (i) one continuous probability distribution, (ii) more continuous probability distributions, (iii) one discrete probability distribution and (iv) more discrete probability distributions preferably comprises at least one of the group consisting of a) one direct determination step, b) more direct determination steps, c) one indirect determination step, d) more indirect determination steps. The determination of said more parameters by at least one of the group consisting of (i) one continuous probability distribution, (ii) more continuous probability distributions, (iii) one discrete probability distribution, and (iv) more discrete probability distributions preferably comprises at least one of the group consisting of a) one direct determination step, b) more direct determination steps, c) one indirect determination step, d) more indirect determination steps. One parameter determined by one direct determination step or by more direct determination steps preferably means that said one parameter directly is a function or a function value of at least one of (i) one continuous probability distribution, (ii) more continuous probability distributions, (iii) one discrete probability distribution, and (iv) more discrete probability distributions. More parameters determined by one direct determination step or by more direct determination steps preferably means that each of said more parameters directly is a function or function value of at least one of (i) one continuous probability distribution, (ii) more continuous probability distributions, (iii) one discrete probability distribution, and (iv) more discrete probability distributions. One parameter determined by one indirect determination step or by more indirect determination steps preferably means that said one parameter results from a function or a function value of at least one of (i) one continuous probability distribution, (ii) more continuous probability distributions, (iii) one discrete probability distribution, and (iv) more discrete probability distributions. More parameters determined by one indirect determination step or by more indirect determination steps preferably means that each of said more parameters results from a function or a function value of at least one of (i) one continuous probability distribution, (ii) more continuous probability distributions, (iii) one discrete probability distribution, and (iv) more discrete probability distributions. For example, the determination of said more parameters comprises more indirect determination steps, i.e., the determination can be done by, as one step, determining a random pattern of discrete x,y positions using one continuous probability distribution or more continuous probability distributions and, as another step, determining for each of said discrete x,y positions, a discrete surface modulation value using said one or another continuous probability distribution or said more or other more continuous probability distributions. In this example, the more parameters defining said random function of coordinates x and y are then determined by fitting a mathematical function, said mathematical function parametrized by said more parameters, to said discrete surface modulation values at said discrete x,y positions.

A domain of said continuous random surface modulation function preferably is defined such that said domain is comprised in a domain of the predefined surface for the spectacle lens said continuous random surface modulation function is applied to. Said domain being comprised in said domain of the predefined surface for the spectacle lens said continuous random surface modulation function is applied to preferably is a simply connected domain. Preferably, said domain is comprised in said domain of the predefined surface for the spectacle lens in that said domain coincides with at least one of 60%, 70%, 80%, 90% of the domain of the predefined surface for the spectacle lens.

For example, if data of the predefined surface for the spectacle lens is defined within an area inside a radius of 40 mm around an x,y position of an optical centre of a digital twin of said spectacle lens, the domain of said random surface modulation function is equal to or smaller than said area. The optical centre of the digital twin of the spectacle lens is defined analogously as in ISO 13666:2019(E), entry 3.2.15, as intersection of an optical axis with a front surface of the digital twin of the spectacle lens. An optical centre of the spectacle lens is as defined in ISO 13666:2019(E), entry 3.2.15, an intersection of an optical axis (3.1.8) with a front surface (3.2.13) of the spectacle lens (3.5.2).

The predefined surface for the spectacle lens preferably is a spherical surface, the spherical surface as defined in ISO 13666:2019(E), entry 3.4.1, or an aspherical surface, the aspherical surface as defined in ISO 13666:2019(E), entry 3.4.3. The aspherical surface preferably is rotationally symmetric. Preferably, the domain of the continuous random surface modulation function is defined such that said domain is comprised in a domain of at least one of the predefined front surface and the predefined back surface, preferably the predefined front surface, said continuous random surface modulation function is applied to.

Preferably, the continuous random surface modulation function is a non-periodic mathematical function of coordinates x and y that is defined by the one parameter or the more parameters. Preferably, the continuous random surface modulation function has a value greater than zero for each x,y position in the domain of said continuous random surface modulation function.

In contrast to the continuous random surface modulation function that is described here, WO 2021/260642 A1 defines in paragraph [00110] modulating functions as surface modulation functions that are not random. Further, in contrast to the continuous random surface modulation function being a mathematical function of coordinates x and y, the modulating functions described in WO 2021/260642 A1 are mathematical functions of one independent variable only.

A random surface modulation function is "continuous" if a change of a value of said random surface modulation function is arbitrarily small when changes of arguments of said random surface modulation function are sufficiently small.

In contrast to the continuous random surface modulation function that is described here, US 2022/0034179 A1 discloses a spectacle lens comprising scattering centres arranged in a pattern that includes a random variation in spacing between adjacent dots and/or a random variation in dot size. The scattering centres of US 2022/0034179 A1 can be positioned relative to a regular array of lattice sites, where each scattering centre is displaced in at least one dimension from a corresponding one of the lattice sites by an amount equal to or less than a jitter amplitude, the jitter amplitude being a fraction of a distance between adjacent lattice sites. The scattering centres of US 2022/0034179 A1 can have a dimension that varies randomly from a nominal value, the random variation being equal to or less than a jitter amplitude. The scattering centres of US 2022/0034179 A1 can have a volume that varies randomly from a nominal value, the random variation being equal to or less than a jitter amplitude. Alternatively or additionally, the spectacle lens according to US 2022/0034179 A1 may incorporate optical defocus. Thus, US 2022/0034179 A1 describes a random modulation of a surface that is discrete, i.e., non-continuous. A continuous random surface modulation as described here is assumed to have a larger effect in preventing habituation than a discrete random surface modulation as described in US 2022/0034179 A1.

A "scaled continuous random surface modulation function" is a continuous random surface modulation function multiplied by a scaling function. Said scaling function may be a mathematical function of coordinates x and y. Preferably, a value range of said scaling function is between 0 and 1, 0 and 1 included in said value range. Said scaling function is used to suppress or reduce surface modulation within predefined areas of the predefined surface for the spectacle lens when applying said scaled continuous random surface modulation function to said predefined surface for said spectacle lens. Said scaling function suppresses the surface modulation of said predefined surface for said spectacle lens where the value of said scaling function is 0. Said scaling function reduces the surface modulation of said predefined surface for said spectacle lens where the value of said scaling function is larger than 0 and smaller than 1. Preferably, the scaling function, being a mathematical function of coordinates x and y, has either i) a reflection symmetry along two perpendicular meridians or ii) a rotational symmetry, for example, a rotational symmetry around the optical centre of the digital twin of the spectacle lens.

A domain of said scaling function preferably is defined such that said domain is equal to the domain of the continuous random surface modulation function.

Using a sinusoidal spectacle lens modulation pattern as described in paragraph [0166] of EP 4 089 473 A1 and shown in figure 4a of EP 4 089 473 A1 as a scaling function, said scaling function having a value range between 0 and 1, 0 and 1 included in said value range, the continuous random surface modulation function multiplied with this scaling function allows to create island-shaped structures. In areas occupied by said island-shaped structures said scaled continuous random surface modulation function applied to the predefined surface for the spectacle lens results in the randomly modified surface.

Data of the randomly modulated surface is "resulting" from an application of a continuous random surface modulation function or a scaled continuous random surface modulation function to data of a predefined surface for the spectacle lens when said continuous random surface modulation function or said scaled continuous random surface modulation function is used to modify said data of said predefined surface for the spectacle lens. Modifying said data of said predefined surface for the spectacle lens means, for each x,y position in the domain of the continuous random surface modulation function or in the domain of the scaled continuous random surface modulation function, a location of a surface point at said x,y position is moved by an amount defined by the value of the continuous random surface modulation function at said x,y position or by the value of the scaled continuous random surface modulation function at said x,y position. The location of said surface point at said x,y position is moved by said amount either in z direction or in a direction along a surface normal at said x,y position. Preferably, each x,y position in the domain of the continuous random surface modulation function or in the domain the scaled continuous random surface modulation function is an arbitrary x,y position. If said data of said predefined surface for the spectacle lens is in form of a continuous mathematical function, when moving surface points in z direction, the application of said continuous random surface modulation function or said scaled continuous random surface modulation function to said continuous mathematical function is a simple addition of said continuous random surface modulation function to said continuous mathematical function or a simple addition of said scaled continuous random surface modulation function to said continuous mathematical function each resulting in a continuous mathematical function, i.e., data of the randomly modulated surface for the spectacle lens is in form of a continuous mathematical function. If said data of said predefined surface for the spectacle lens is discretized in form of discrete x,y,z positions, said discrete x,y,z positions preferably being arbitrary discrete x,y,z positions or predefined discrete x,y,z positions, when moving surface points in any direction, the value of said continuous random surface modulation function or the value of said scaled continuous random surface modulation function is calculated at each of the discrete x,y positions of said discrete x,y,z positions of said predefined surface for the spectacle lens. Each value of said continuous random surface modulation function at each of the discrete x,y positions or each value of said scaled continuous random surface modulation function at each of the discrete x,y positions is used to move said discrete x,y,z positions of said predefined surface for the spectacle lens by an amount defined by said value in a selected direction at a respective discrete x,y position. Preferably, the selected direction at each respective discrete x,y position is the z direction or a direction along a surface normal of said predefined surface for the spectacle lens at each respective discrete x,y position.

Preferably, the continuous random surface modulation function or the scaled continuous random surface modulation function is used to modify the data of said predefined surface for the spectacle lens to result in data of the randomly modulated surface such that a spatial frequency bandwidth in x direction of the surface modulation is smaller than a spatial frequency bandwidth in x direction of the predefined surface. Preferably, a spatial frequency bandwidth in y direction of the surface modulation is smaller than a spatial frequency bandwidth in y direction of the predefined surface. Preferably, a spatial frequency bandwidth in any direction within the x,y plane of the surface modulation is smaller than a spatial frequency bandwidth in a same direction within the x,y plane of the predefined surface. The discrete random surface modulation as described in US 2022/0034179 A1 does not allow to calculate function values of said discrete random surface modulation at arbitrary x,y positions. In other words, the discrete random surface modulation as described in US 2022/0034179 A1 does not allow to calculate function values of said discrete random surface modulation at x,y positions in between the predefined discrete x,y positions defined in US 2022/0034179 A1. Thus, the discrete random surface modulation as described in US 2022/0034179 A1 cannot be used to modify data of a surface discretized in form of arbitrary discrete x,y,z positions if the x,y positions of said arbitrary discrete x,y,z positions do not coincide with the predefined discrete x,y positions defined in US 2022/0034179 A1. In contrast, the continuous random surface modulation function or the scaled continuous random surface modulation function described here allows to modify data of said predefined surface of the spectacle lens discretized in form of arbitrary discrete x,y,z positions, as described above.

An x,y,z position, an x,y position, a discrete x,y,z position, a discrete x,y position each is defined in an x,y,z coordinate system which is defined as follows: A predefined point of each of the digital twin of the spectacle lens defines an origin of an x,y,z coordinate system and i) a surface normal or ii) a primary direction at said predefined point defines a z direction. An x,y direction is in a plane perpendicular to said surface normal or said primary direction. In said plane perpendicular to said surface normal or said primary direction an x direction and a y direction are perpendicular to each other. Said predefined point preferably is selected from the group consisting of a fitting point and an optical centre. The primary direction of the digital twin of the spectacle lens is defined analogously as in ISO 13666:2019(E), entry 3.2.25, as direction of a virtually represented line of sight (3.2.24), usually taken to be a horizontal, to an object at an infinite distance when assumed looking straight ahead in unaided vision. The primary direction of the spectacle lens is defined as in ISO 13666:2019(E), entry 3.2.25, as direction of a line of sight (3.2.24), usually taken to be a horizontal, to an object at an infinite distance measured with habitual head and body posture when looking straight ahead in unaided vision. The fitting point of the digital twin of the spectacle lens is defined analogously as in ISO 13666:2019(E), entry 3.2.34, a point on the front surface (3.2.13) of the digital twin of the spectacle lens stipulated for virtual positioning the digital twin relative to an eye model, for example a predefined eye model. The fitting point of the spectacle lens is as defined in ISO 13666:2019(E), entry 3.2.34, a point on the front surface (3.2.13) of the spectacle lens (3.5.2) stipulated by a manufacturer for positioning the spectacle lens in front of an eye. According and analogously to note 1 to entry 3.2.30 (centration point) of ISO 13666:2019(E), the optical centre (3.2.15) usually applies to a single vision spectacle lens (3.7.1) and a digital twin of the single vision spectacle lens. Further, according and analogously to note 1 to entry 3.2.30 (centration point) of ISO 13666:2019(E), the fitting point (3.2.24) usually applies to a) a position-specific single-vision spectacle lens (3.7.2) and a digital twin of the position-specific single-vision spectacle lens or b) a power-variation spectacle lens (3.7.7) and a digital twin of the power-variation spectacle lens.

Alternatively, a surface normal at either an apex of the front surface or an apex of the back surface each of the respective digital twin of the spectacle lens or the spectacle lens shall define an origin of an x,y,z coordinate system and a z direction. An x,y direction shall be in a tangential plane to either said front surface at the apex or said back surface at the apex. An x direction and a y direction shall be perpendicular to each other in said tangential plane.

Preferably, the method configured for calculating, by a computer, data of the spectacle lens for the purpose of the use of the data for the manufacture of the spectacle lens, the method comprising the step of generating data of a randomly modulated surface for said spectacle lens,

the method being characterized in that the continuous random surface modulation function is a non-periodic mathematical function.

Preferably, the continuous random surface modulation function is a non-periodic mathematical function of coordinates x and y that is defined by one parameter or more parameters, the one parameter being the one parameter of the continuous random surface modulation function, the more parameters being the more parameters of the continuous random surface modulation function. The continuous random modulation function being the non-periodic mathematical function of coordinates x and y and being defined by said one parameter or said more parameters underlines the random character of the randomly modulated surface resulting from the application of a non-periodic continuous random surface modulation function or a scaled non-periodic continuous random surface modulation function to the predefined surface of the spectacle lens. The application of the non-periodic continuous random surface modulation function or the scaled non-periodic continuous random surface modulation function to the predefined surface of the spectacle lens preferably excludes to the greatest possible extend any regularity for the randomly modulated surface.

Preferably, the method configured for calculating, by a computer, data of the spectacle lens for the purpose of the use of the data for the manufacture of the spectacle lens, the method comprising the step of generating data of a randomly modulated surface for said spectacle lens,

the method being characterized in that said continuous random surface modulation function is multiplied with a scaling function to result in said scaled continuous random surface modulation function, said scaling function having either i) a reflection symmetry along two perpendicular meridians or ii) a rotational symmetry.

Preferably, the scaling function, being a mathematical function of coordinates x and y, has either i) a reflection symmetry along two perpendicular meridians or ii) a rotational symmetry, for example, a rotational symmetry around the optical centre of the digital twin of the spectacle lens.

As described before, the scaling function allows to create one area or more areas in which the scaling function has the value zero. In this area or in these areas the randomly modified surface coincides with the predefined surface for the spectacle lens. Surrounding such an area, the scaling function with reflection symmetry along two perpendicular meridians or with rotational symmetry allows to create one ring-shaped structure having a path within said one ring-shaped structure starting from a point within said one ring-shaped structure and ending in said point again, said path within said one ring-shaped structure surrounding the area where the predefined surface for the spectacle lens is preserved due to the scaling function being zero. Surrounding such areas, the scaling function with reflection symmetry along two perpendicular meridians or with rotational symmetry allows to create more ring-shaped structures each having a path within a same of said more ring-shaped structures starting from a point within said same ring-shaped structure and ending in said point again, said path within said same ring-shaped structure surrounding an area where the predefined surface for the spectacle lens is preserved due to the scaling function being zero. In an area occupied by said one ring-shaped structure or by said more ring-shaped structures the scaled continuous random surface modulation function applied to the predefined surface for the spectacle lens results in the randomly modified surface.

Preferably, the method configured for calculating, by a computer, data of the spectacle lens for the purpose of the use of the data for the manufacture of the spectacle lens, the method comprising the step of generating data of a randomly modulated surface for said spectacle lens,

the method being characterized in that said continuous random surface modulation function has a value greater than zero for each x,y position in a domain of said continuous random surface modulation function.

Preferably, the continuous random surface modulation function is having a value greater than zero for each x,y position in the domain of said continuous random surface modulation function, i.e., the application of said continuous random surface modulation function to the predefined surface for the spectacle lens results in the randomly modified surface that does not comprise an x,y position coinciding with an x,y position of the predefined surface for the spectacle lens.

Preferably, the method configured for calculating, by a computer, data of the spectacle lens for the purpose of the use of the data for the manufacture of the spectacle lens, the method comprising the step of generating data of a randomly modulated surface for said spectacle lens,

the method being characterized in that said scaled continuous random surface modulation function has a value equal to zero for each x,y position in a predefined area or in predefined areas of said continuous random surface modulation function.

Preferably, the scaled continuous random surface modulation function is having a value equal to zero when the continuous random surface modulation function is multiplied with a scaling function and said scaling function is having the value zero. Applying the scaled continuous surface modulation function to the predefined surface for the spectacle lens results in a randomly modulated surface which coincides with said predefined surface for the spectacle lens in a predefined area or in predefined areas in which the scaling function and thus the scaled continuous surface modulation function is having the value zero for each x,y position within said predefined area or said predefined areas. Applying the scaled continuous random surface modulation function to the predefined surface for the spectacle lens, said scaled continuous random surface modulation function having the value zero for each x,y position in said predefined area or for each x,y position in said predefined areas, allows to position said predefined area or said predefined areas such that the resulting randomly modulated surface coincides with the predefined surface for the spectacle lens, for example, in an area comprising the optical centre or the fitting point of the digital twin of the spectacle. This in turn, after manufacturing the spectacle lens allows a spectacle lens wearer to perceive a visual impression according to their prescribed power, if any.

Applying the scaled continuous random surface modulation function to the predefined surface for the spectacle lens, said scaled continuous random surface modulation function having the value zero for each x,y position in said predefined area or for each x,y position in said predefined areas, allows to position said predefined area or said predefined areas such that the resulting randomly modulated surface coincides with the predefined surface for the spectacle lens, for example, according to an existing spectacle lens design. For example, applying the scaled continuous random surface modulation function to the predefined surface for the spectacle lens, said scaled continuous random surface modulation function having the value zero for each x,y position in said predefined area or for each x,y position in said predefined areas, allows to position said predefined area or said predefined areas such that the resulting randomly modulated surface coincides with the predefined surface for the spectacle lens in areas according to a spectacle lens design as described in WO 2023/155984 A1. To position said predefined area or said predefined areas such that the resulting randomly modulated surface coincides with the predefined surface for the spectacle lens according to the existing spectacle lens design combines advantages inherent to said existing spectacle lens design with a habituation prevention due to the randomly modulated surface outside said predefined area or said predefined areas.

Since the scaling function reduces the surface modulation of said predefined surface for said spectacle lens where the value of said scaling function is larger than zero (0) and smaller than one (1), the scaled continuous random surface modulation function multiplied with said value greater than 0 and smaller than 1, ensures that a transition between

- said predefined area or said predefined areas, where the scaled continuous random surface modulation function is zero, and in which the randomly modified surface resulting from the application of the scaled continuous random surface modulation function and thus coincides with the predefined surface for said spectacle lens, and
- an area or areas where the scaled continuous random surface modulation function is larger than zero

is not a step.

A preselection of a first area or first areas on the predefined surface for the spectacle lens to which the continuous random surface modulation function shall not be applied to whereas in another preselected second area or in other preselected second areas on the predefined surface for the spectacle lens the continuous random surface modulation function shall be applied to does not equally result in a transition between said first and second area(s) not being a step.

A step between adjacent areas on the randomly modified surface for the spectacle lens is perceived by the spectacle lens wearer as image jumps and/or distortion reducing the spectacle lens wearer's comfort.

Preferably, the method configured for calculating, by a computer, data of the spectacle lens for the purpose of the use of the data for the manufacture of the spectacle lens, the method comprising the step of generating data of a randomly modulated surface for said spectacle lens,
the method being characterized in that data of said randomly modulated surface is combined with data of an opposite predefined surface for said spectacle lens with an arbitrary rotation of said randomly modulated surface with respect to said opposite predefined surface.

In case, the randomly modified surface is the modified version of a rotationally symmetric predefined surface for the spectacle lens, the combination with an opposite predefined surface preferably is such that the spectacle lens wearers prescribed power is implemented in the spectacle lens. Simultaneously, an arbitrary combination of said randomly modified surface and said opposite predefined surface adds an additional factor that prevents habituation, in particular in case, always a same randomly modified surface is used for combination but the opposite predefined surface changes, for example from time to time due to changes in the spectacle lens wearers prescribed power.

Preferably, the method configured for calculating, by a computer, data of the spectacle lens for the purpose of the use of the data for the manufacture of the spectacle lens, the method comprising the step of generating data of a randomly modulated surface for said spectacle lens,

the method being characterized in that said continuous random surface modulation function is determined by using at least one of the group consisting of a random bicubic spline function, random ellipsoid functions and a random wavelet decomposition.

There are various families of mathematical bases that fulfil the requirements for decomposition and reconstruction of a continuous mathematical function using a wavelet basis. For continuous mathematical functions, so called biorthogonal wavelets are usually used. Biorthogonal wavelets are denoted by the polynomial degree of their scaling functions. For example, the numbers 3.3 represent the polynomial degree of the two scaling functions common for biorthogonal wavelets. 3.3 here means that the first scaling function is of polynomial degree 3 as well as the second scaling function. Random wavelet functions are for example Haar, Daubechies, Mexican hat wavelet or biorthogonals of any type bior1.1, bior2.2, bior3.1, bior3.3, bior5.1 , bior5.3, and so on, using random coefficients.

Preferably, the method configured for calculating, by a computer, data of the spectacle lens for the purpose of the use of the data for the manufacture of the spectacle lens, the method comprising the step of generating data of a randomly modulated surface for said spectacle lens,

the method being further configured to manufacture the spectacle lens according to said data.

Example 1: Proceeding to generate a scaled continuous random surface modulation function by using a random bicubic spline modulation function is as follows:

1. Define equidistant two-dimensional jittered grid (x_i, y_i), i = 1, ..., n, defined by

    a. the diameter 65 mm of the area to be modulated and
    b. a step size of 3 mm (spacing between grid points in x- and y-direction).
    c. Add to every position a normally random distributed offset in x and y, so x_j = x_i + xn_i where xn_i is a random number N(0, sigma), with mean zero and sigma = 0.5
    d. Finally, the grid (x_i, y_i) is rotated by an angle alpha = 33 degrees

2. Pick random values z_i at every grid position (x_i, y_i) from an exponential distribution with parameter alpha = 0.03. This results in a point cloud.
3. Calculation of a spline function using bicubic splines f(x, y) such that f is an interpolator of the values z_i at the given random positions (x_i, y_i), meaning f(x_i, y_i) = z_i for all i = 1, ..., n.
4. Scale this function by an exponential scaling function f_damp to allow for a clear inner zone with a radius of r_clear of 5 mm and an outer clear zone with radius r_trt = 25.0 mm

$$f_{damp} = e^{-\left(\frac{r-r_{trt}}{\omega}\right)^{\alpha}} - e^{-\left(\frac{r-r_{clear}}{\omega}\right)^{\alpha}}$$

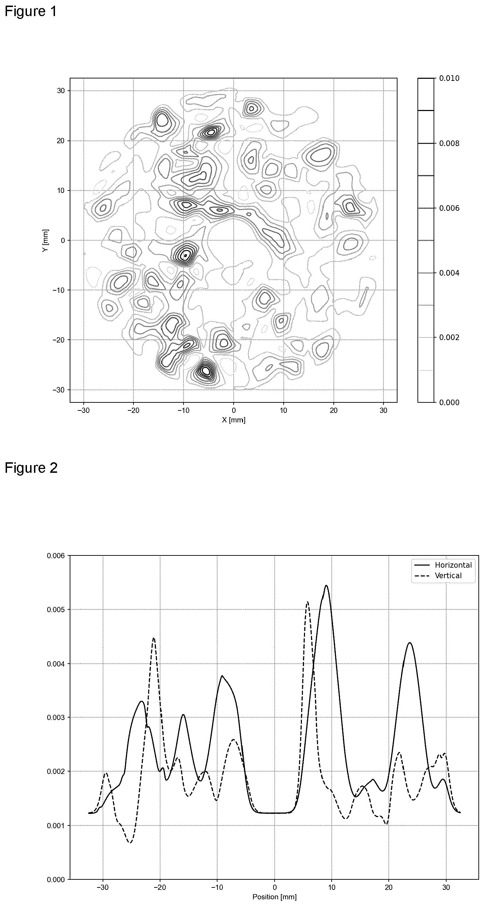

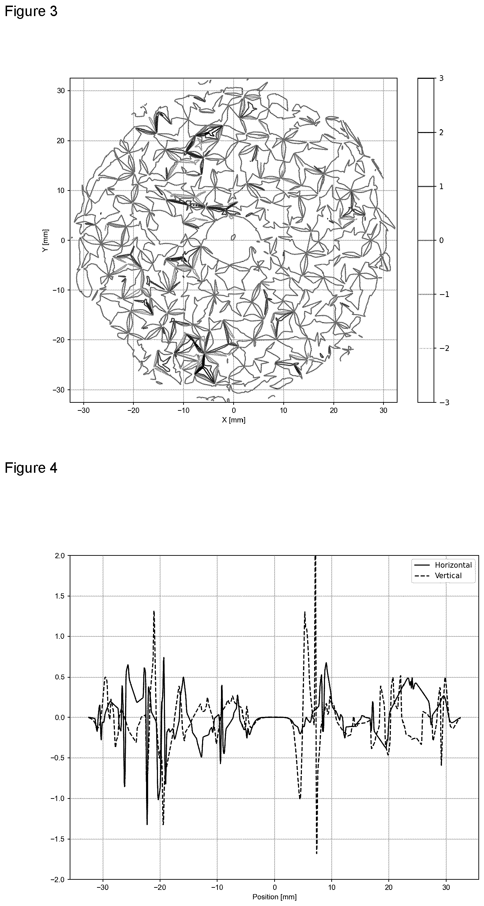

using a scaling of omega = 5.0 and an exponent alpha = 6. This results in a scaling function.
5. The surface modulation is evaluated at a required two-dimensional grid (x_k, y_k), k=1, ..., m. Resulting values z_k are normalized and scaled to be in the range [0.0, 10.0μm], The resulting modulation can be seen in Figure 1 (contour line plot of resulting scaled continuous random surface modulation function), corresponding cross-sections along x = 0 and y = 0 can be found in Figure 2 (cross-sections plot of resulting scaled continuous random surface modulation function).
6. Surface power of the modulation can be calculated by the curvature of the surface. Results are shown in Figure 3 (contour line plot of resulting surface power of the modulation) and Figure 4 (cross-section plot of resulting surface power of a randomly modulated surface when the scaled continuous random modulation function was applied to a plane).

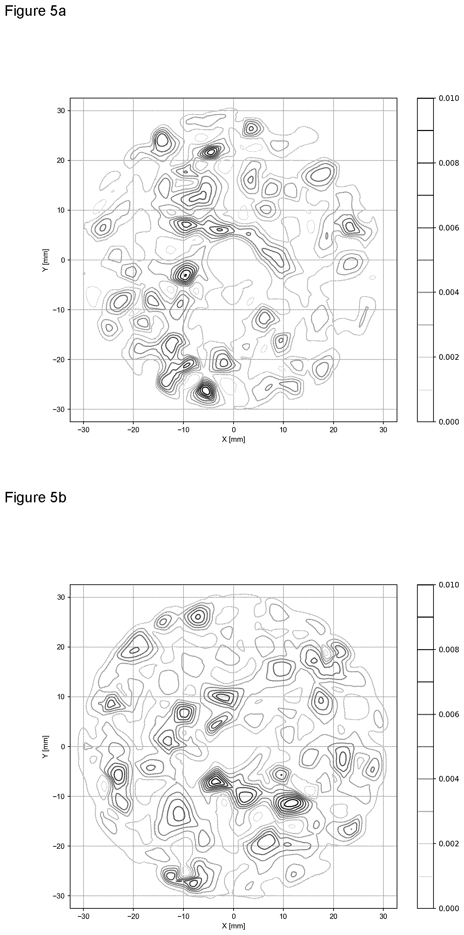

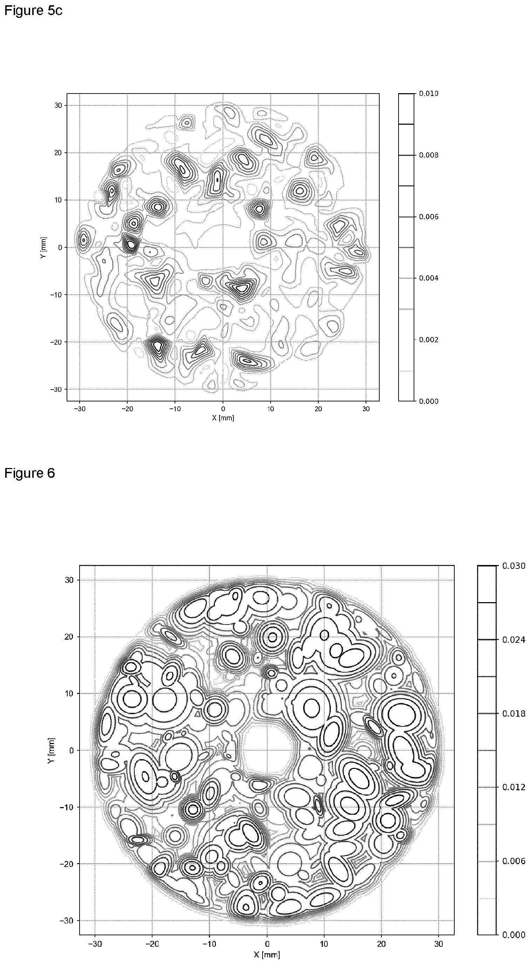

Different realizations of the continuous random modulation function result in different modulations. This can be seen in Figures 5a, 5b, 5c (three different realizations of the proceeding for example 1. All parameters are the same but different realizations of random positions and values).

Example 2: Proceeding to generate a scaled continuous random surface modulation function by using random ellipsoids, starting as in step 1 from example 1 with same parameters, to get a two-dimensional jittered grid (x_i, y_i), i = 1, ..., n. This is followed by the calculation of areas of ellipsoidal shape of random size, orientation and curvature, this means for a centered and rotated new grid

$$x_j = (x - x_i) * \cos\theta_j - (y - y_i) * \sin\theta_j$$

$$y_j = (x - x_i) * \sin \theta_j + (y - y_i) * \cos \theta_j$$

with $\theta_j$ picked from a random uniform distribution of angles between 0.0 and 180°. Heights of every ellipsoid are calculated along the following equation

$$z_j = (h_j - r_j) + sqrt\left(r_j^2 - \left(\frac{x_j^2}{sc_x} + \frac{y_j^2}{sc_y}\right)\right)$$

where h_j are maximal heights picked from a uniform distribution within [1, 30] μm, the scaling factors sc_x and sc_y are picked from a uniform distribution within [0.2, 2.0] and the radii rJ from a uniform distribution within [1000.0/5.0, 1000.0/0.5]. The resulting surface z_0 is the superposition by maximum of all ellipsoids z_j, so

$$z_0(x, y) = maximum\left(0.0, z_j(x, y)\right) \ for \ all \ j$$

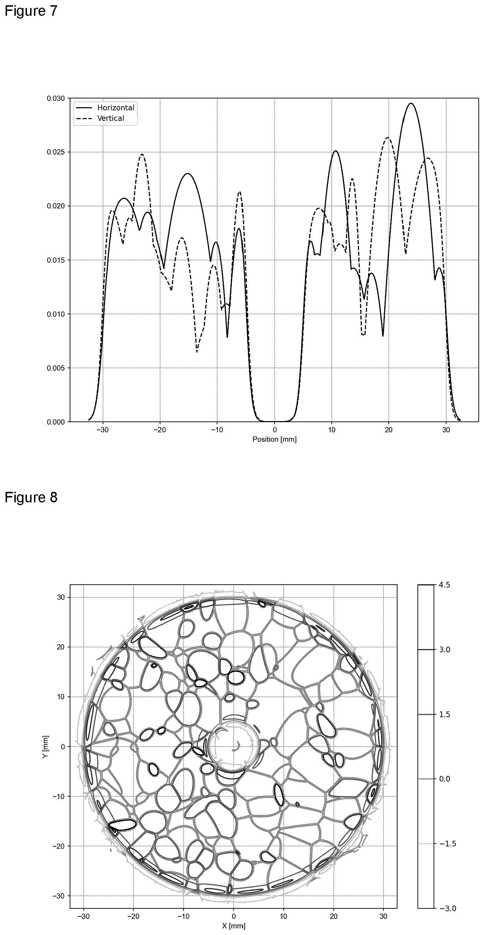

Said surface z_0 is used as continuous random surface modulation function. This continuous random surface modulation function is scaled accordingly step 4 of example 1 using the same parameter and is shown in Figure 6 (contour line plot of resulting modulation values for example 2), Figure 7 (cross-sections plot of resulting modulation values for example 2), Figure 8 (contour line plot of resulting surface power of a randomly modulated surface when the scaled continuous random modulation function according to example 2 was applied to a plane) and Figure 9 (cross-section plot of resulting surface power of a randomly modulated surface when the scaled continuous random modulation function for example 2 was applied to a plane).

Example 3: Proceeding to generate a scaled continuous random surface modulation function by using a specific example of a random wavelet modulation function is as follows:

    1. Define an equidistant two-dimensional grid $(x_{ij}, y_{ij})$, $i,j = 0, ...,2^{10}$ fully covering the spectacle lens diameter of 65 mm.
    2. Definition of the continuous random surface modulation function using one level of a wavelet decomposition

        a. Define an array of zero values for the grid from 1) $z_{ij} = 0$, $i,j = 0, ..., 2^{10}$
        b. The array $z_{ij}$ is then decomposed for a defined type of wavelet $wvl = bior$3.3, i.e. a biorthogonal wavelet of order 3 for decomposition and reconstruction and maximal level $l_{mx} = 4$ (nomenclature as described in the PyWavelets Documentation, Release 1.3.0, The PyWavelets Developers, March 11, 2022). This results in four arrays per level representing the decomposed continuous random surface modulation function,

$$d_{ij}, d_{ij}^H, d_{ij}^V, d_{ij}^D, i, j = 0, ..., n_{lvl}$$

        where $d_{ij}$ represents the coarse continuous random surface modulation function at level $lvl = 0,..., l_{mx}$ and $d_{ij}^H, d_{ij}^V, d_{ij}^D$ the horizontal, vertical and diagonal detail.
        c. For the coarsest level $lvl = 0$ pick values for $d_{ij}$, $i,j = 0,..., 70$ from a uniform random distribution of the range [0,1].
        d. Reconstruct the continuous random surface modulation function across all levels resulting in new $z_{ij} \neq 0$, $i, j = 0, ..., 2^{10}$.

    3. Scale the continuous random surface modulation function to a maximal modulation height of 5 μm along steps 4) and 5) from example 1.

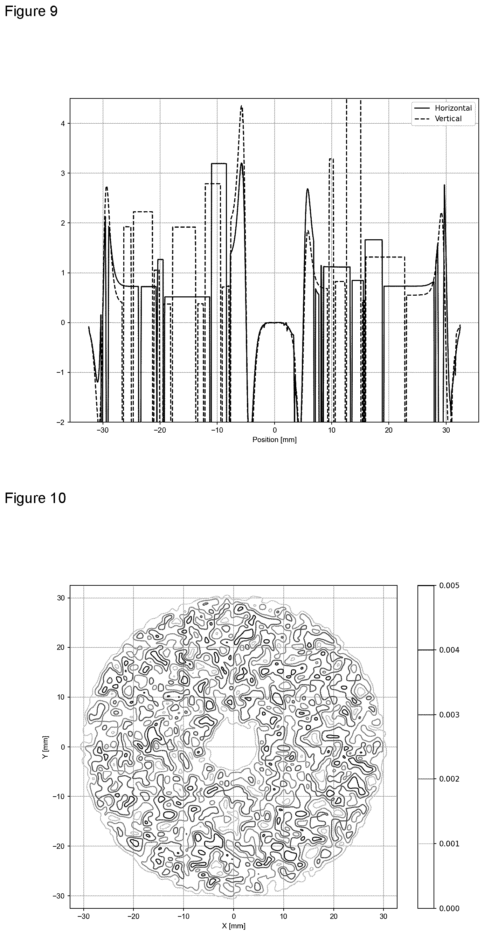

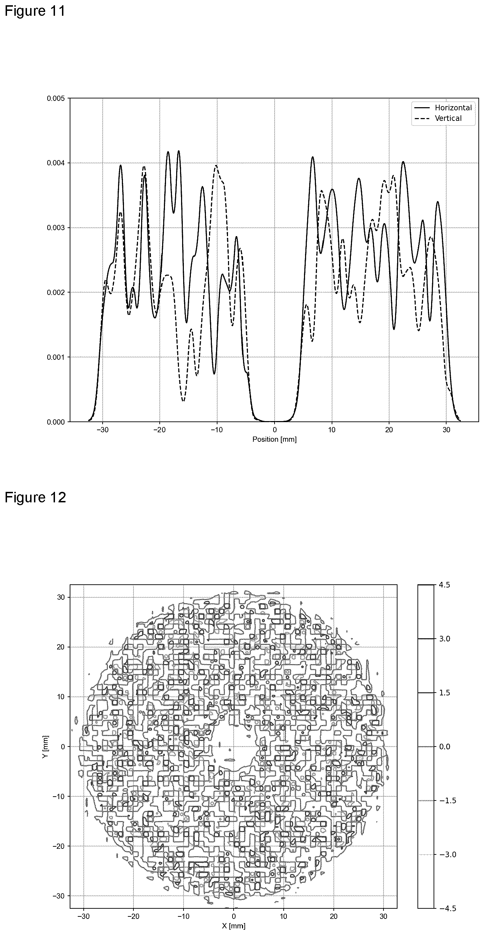

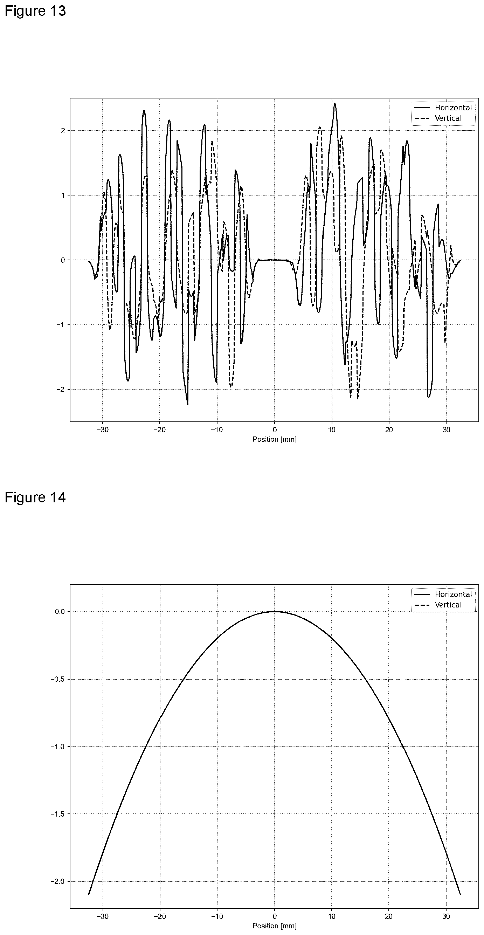

The resulting surface modulation is shown in Figure 10 (contour line plot of resulting scaled continuous random surface modulation function for example 3), Figure 11 (cross-sections plot of resulting scaled continuous random surface modulation function for example 3), Figure 12 (contour line plot of resulting surface power of a randomly modulated surface when the scaled continuous random modulation function for example 3 was applied to a plane) and Figure 13 (cross-section plot of resulting surface power of a randomly modulated surface when the scaled continuous random modulation function for example 3 was applied to a plane).

Application of continuous random surface modulation function to predefined surface for spectacle lens The simplest approach is the additive superposition along z-direction. This means the total z(x,y) positions of the randomly modified surface is given by

$$z_{total}(x_i, y_i) := z_{lens}(x_i, y_i) + z_{modulation}(x_i, y_i), for\ all\ (x_i, y_i)$$

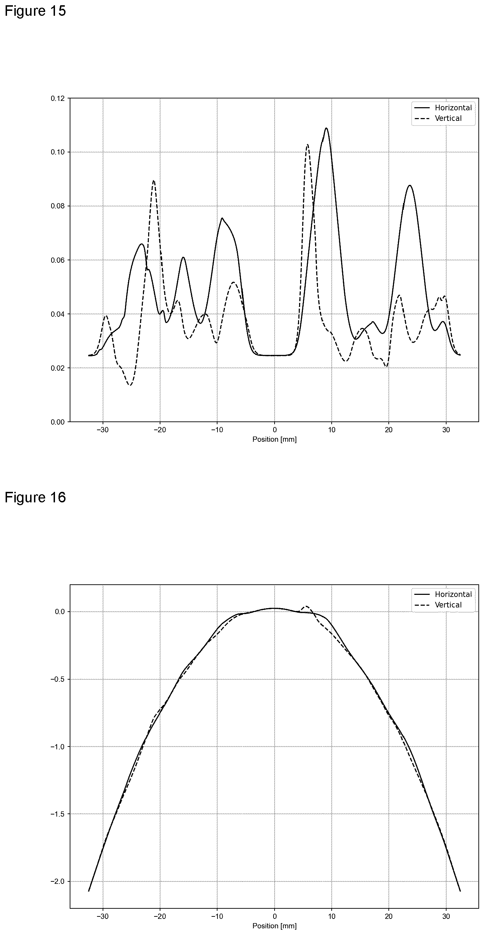

where $z_{lens}$ defines the z(x,y) positions of the predefined surface for the spectacle lens (Figure 14, z(x,y) positions of a spherical predefined front surface for an exemplary spectacle lens with a front radius of 253.0 mm) and $z_{modulation}$ the values of the scaled continuous random surface modulation function as described in examples 1, 2 and 3 (Figure 15, cross section plot of resulting scaled continuous random surface modulation function according to example 1). A horizontal and a vertical cross section through the z(x,y) positions of the randomly modified surface is shown in Figure 16 (cross section plot of resulting randomly modified surface resulting from applying the scaled continuous random surface modulation function according to example 1 to the predefined front surface of Figure 14).

**Claims**

1. Method being configured for calculating, by a computer, data of a spectacle lens for the purpose of a use of the data for a manufacture of the spectacle lens, the method comprising the step of

   - generating data of a randomly modulated surface for said spectacle lens, the method being **characterized in that**

   said data of said randomly modulated surface resulting from an application of a continuous random surface modulation function or a scaled continuous random surface modulation function to a predefined surface for said spectacle lens.

2. Method according to claim 1, **characterized in that** said continuous random surface modulation function is a non-periodic mathematical function.

3. Method according to any one of the preceding claims, **characterized in that** said continuous random surface modulation function is multiplied with a scaling function to result in said scaled continuous random surface modulation function, said scaling function having either i) a reflection symmetry along two perpendicular meridians or ii) a rotational symmetry.

4. Method according to any one of the preceding claims, **characterized in that** said continuous random surface modulation function has a value greater than zero for each x,y position in a domain of said continuous random surface modulation function.

5. Method according to any one of the preceding claims, **characterized in that** said scaled continuous random surface modulation function has a value equal to zero for each x,y position in a predefined area or in predefined areas of said continuous random surface modulation function.

6. Method according to any one of the preceding claims, **characterized in that** data of said randomly modulated surface is combined with data of an opposite predefined surface for said spectacle lens with an arbitrary rotation of said randomly modulated surface with respect to said opposite predefined surface.

7. Method according to any one of the preceding claims, **characterized in that** said continuous random surface modulation function is determined by using at least one of the group consisting of a random bicubic spline function, random ellipsoid functions and a random wavelet decomposition.

8. Method according to any one of the preceding claims, the method being further configured to manufacture the spectacle lens according to said data.

Figure 1

Figure 2

Figure 3

Figure 4

Figure 5a

Figure 5b

Figure 5c

Figure 6

Figure 7

Figure 8

Figure 9

Figure 10

Figure 11

Figure 12

Figure 13

Figure 14

Figure 15

Figure 16

Europäisches
Patentamt

European
Patent Office

Office européen
des brevets

# EUROPEAN SEARCH REPORT

**Application Number**

EP 23 21 8718

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2021/260642 A1 (BRIEN HOLDEN VISION INSTITUTE LTD [AU]) 30 December 2021 (2021-12-30) | 1-5,7,8 | INV. G02C7/02 |
| A | * paragraph [0013] - paragraph [00272] * | 6 | |
| X | US 2013/046381 A1 (ZALEVSKY ZEEV [IL] ET AL) 21 February 2013 (2013-02-21) * paragraph [0016] - paragraph [0060] * | 1,4,7,8 | |
| X | US 2023/111585 A1 (ALONSO JOSÉ [ES] ET AL) 13 April 2023 (2023-04-13) * paragraph [0020] - paragraph [0029] * | 1,4,7,8 | |
| A | JP 2023 537034 A (MUSCHIELOK ADAM [DE]) 30 August 2023 (2023-08-30) * paragraph [0024] * | 7 | |

**TECHNICAL FIELDS SEARCHED (IPC)**

G02C

The present search report has been drawn up for all claims

| Place of search | Date of completion of the search | Examiner |
|---|---|---|
| Munich | 22 May 2024 | Albero Silvestre, J |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

& : member of the same patent family, corresponding
   document

EPO FORM 1503 03.82 (P04C01)

## ANNEX TO THE EUROPEAN SEARCH REPORT
## ON EUROPEAN PATENT APPLICATION NO.

EP 23 21 8718

This annex lists the patent family members relating to the patent documents cited in the above-mentioned European search report.
The members are as contained in the European Patent Office EDP file on
The European Patent Office is in no way liable for these particulars which are merely given for the purpose of information.

22-05-2024

| Patent document cited in search report | Publication date | Patent family member(s) | | Publication date |
|---|---|---|---|---|
| WO 2021260642 A1 | 30-12-2021 | AU | 2021294407 A1 | 02-02-2023 |
| | | CA | 3188148 A1 | 30-12-2021 |
| | | CN | 115867851 A | 28-03-2023 |
| | | EP | 4172687 A1 | 03-05-2023 |
| | | JP | 2023531255 A | 21-07-2023 |
| | | KR | 20230028440 A | 28-02-2023 |
| | | TW | 202217401 A | 01-05-2022 |
| | | US | 2023258958 A1 | 17-08-2023 |
| | | WO | 2021260642 A1 | 30-12-2021 |
| US 2013046381 A1 | 21-02-2013 | EP | 2533723 A1 | 19-12-2012 |
| | | EP | 2534525 A1 | 19-12-2012 |
| | | EP | 2534526 A1 | 19-12-2012 |
| | | EP | 2534527 A1 | 19-12-2012 |
| | | EP | 3961290 A1 | 02-03-2022 |
| | | EP | 4033287 A1 | 27-07-2022 |
| | | ES | 2686513 T3 | 18-10-2018 |
| | | ES | 2859669 T3 | 04-10-2021 |
| | | ES | 2897682 T3 | 02-03-2022 |
| | | HU | E041543 T2 | 28-05-2019 |
| | | HU | E054432 T2 | 28-09-2021 |
| | | US | 2011194180 A1 | 11-08-2011 |
| | | US | 2011194195 A1 | 11-08-2011 |
| | | US | 2013033676 A1 | 07-02-2013 |
| | | US | 2013044289 A1 | 21-02-2013 |
| | | US | 2013046381 A1 | 21-02-2013 |
| | | US | 2013050473 A1 | 28-02-2013 |
| | | US | 2014029102 A1 | 30-01-2014 |
| | | US | 2015070766 A1 | 12-03-2015 |
| | | US | 2015198819 A1 | 16-07-2015 |
| | | US | 2015370066 A1 | 24-12-2015 |
| | | US | 2017038503 A1 | 09-02-2017 |
| | | US | 2019011610 A1 | 10-01-2019 |
| | | US | 2019041633 A1 | 07-02-2019 |
| | | US | 2019212478 A1 | 11-07-2019 |
| | | US | 2021389509 A1 | 16-12-2021 |
| | | US | 2022179130 A1 | 09-06-2022 |
| | | WO | 2011099001 A1 | 18-08-2011 |
| | | WO | 2011099002 A1 | 18-08-2011 |
| | | WO | 2011099003 A1 | 18-08-2011 |
| | | WO | 2011099004 A1 | 18-08-2011 |
| US 2023111585 A1 | 13-04-2023 | CA | 3225375 A1 | 13-04-2023 |
| | | US | 2023111585 A1 | 13-04-2023 |
| | | WO | 2023059422 A1 | 13-04-2023 |

EPO FORM P0459

For more details about this annex : see Official Journal of the European Patent Office, No. 12/82

page 1 of 2

## ANNEX TO THE EUROPEAN SEARCH REPORT
## ON EUROPEAN PATENT APPLICATION NO.

EP 23 21 8718

This annex lists the patent family members relating to the patent documents cited in the above-mentioned European search report.
The members are as contained in the European Patent Office EDP file on
The European Patent Office is in no way liable for these particulars which are merely given for the purpose of information.

22-05-2024

| Patent document cited in search report | | Publication date | Patent family member(s) | | Publication date |
|---|---|---|---|---|---|
| JP 2023537034 | A | 30-08-2023 | CL | 2023000386 A1 | 29-09-2023 |
| | | | CN | 116194824 A | 30-05-2023 |
| | | | DE | 102020004840 A1 | 10-02-2022 |
| | | | EP | 4193217 A1 | 14-06-2023 |
| | | | JP | 2023537034 A | 30-08-2023 |
| | | | US | 2023296918 A1 | 21-09-2023 |
| | | | WO | 2022029150 A1 | 10-02-2022 |

EPO FORM P0459

For more details about this annex : see Official Journal of the European Patent Office, No. 12/82

page 2 of 2

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2021260642 A1
- US 20220034179 A1
- EP 4089473 A1
- WO 2023155984 A1